# EUROPÄISCHE PATENTSCHRIFT

(11) **EP 2 064 523 B1**
(45) Veröffentlichungstag und Bekanntmachung des Hinweises auf die Patenterteilung: **07.09.2011**
(21) Anmeldenummer: 07787432.9
(22) Anmeldetag: 12.07.2007
(51) Int. Cl.: G01D 5/14, F02D 9/10, F02D 11/10, G01B 7/30

(54) **VORRICHTUNG ZUR DREHWINKELERFASSUNG EINER ELEKTROMOTORISCH BETRIEBENEN DROSSELKLAPPE**
APPARATUS FOR DETECTING THE ANGLE OF ROTATION OF A THROTTLE VALVE OPERATED BY MEANS OF AN ELECTRIC MOTOR
DISPOSITIF D'ACQUISITION DE L'ANGLE DE ROTATION D'UN PAPILLON ENTRAÎNÉ PAR MOTEUR ÉLECTRIQUE

(30) Priorität: 22.09.2006 DE 102006044855
(43) Veröffentlichungstag der Anmeldung: 03.06.2009
(73) Patentinhaber: MELECS EWS GmbH & Co KG, 7011 Siegendorf (AT)
(72) Erfinder: HELLINGER, Leopold, A-3710 Ziersdorf (AT); NEUMANN, Gerhard, A-3231 St. Margarethen (AT)
(74) Vertreter: Maier, Daniel Oliver
(86) Internationale Anmeldenummer: PCT/EP2007/057161
(87) Internationale Veröffentlichungsnummer: WO 2008/034656

(56) Entgegenhaltungen:
- EP-A- 0 337 099
- EP-A- 1 096 235
- EP-A- 1 452 757
- DE-A1-102005 033 693
- US-A1- 2005 022 785

## Beschreibung

### Technisches Gebiet

Die Erfindung betrifft eine Vorrichtung zur Drehwinkelerfassung für eine elektromotorisch betriebene Drosselklappe, welche auf einer Drosselklappenwelle in einem Ansaugtrakt eines Drosselklappengehäuses drehbar gelagert ist, wobei ein mit der Drosselklappenwelle gekoppelter Stellantrieb von einer Steuerelektronik gesteuert die Drosselklappendrehstellung vorgibt, und wobei ein Sollwert der Drosselklappendrehstellung mittels einer manuell bedienbaren Sollwert-Eingabevorrichtung vorgebbar ist und der Steuerelektronik zugeführt ist.

### Stand der Technik

Bei modernen Kraftfahrzeugen wird die Leistung des Motors häufig elektronisch geregelt. Dabei wird die vom Motor angesaugte Frischgasmenge von einer elektronischen Steuereinheit vorgegeben, welche eine Vielzahl von Betriebsparameter verarbeitet und ein Stellsignal für einen Stellantrieb erzeugt, der über ein Getriebe die Drosselklappe betätigt. Dadurch kann beispielsweise die Leistungsabgabe des Motors innerhalb sicherer Grenzwerte, bzw. die Abgaswerte innerhalb gesetzlich vorgeschriebener Schranken gehalten werden.

Zur messtechnischen Erfassung eines vom Fahrer gewünschten Leistungs-Sollwertes sind Messumformer, die im Gasgriff bzw. im Fahrpedal eines KFZ integriert sind, bekannt. Von Nachteil ist hierbei aber, dass derartige Messumformer eine Hilfsenergie benötigt und das erzeugte Messsignal zu einer entfernt angeordneten Steuerelektronik geleitet werden muss.

Zur Erfassung des Drehwinkels einer Drosselklappenwelle ist aus der DE 101 39 994 B4 eine Vorrichtung bekannt, bei welcher auf einem Zahnrad stirnseitig ein konzentrisch zu einer Schwenkachse angeordneter, halbkreisförmiger Dauermagnet befestigt ist. Im Bewegungskreis dieses Dauermagnetsegments sind Hall-Sensoren angeordnet, welche das radiale Magnetfeld an der Außenseite und an der Innenseite des Dauermagneten erfassen. Die radiale Erfassung des Magnetfeldes bringt aber mit sich, dass die Hall-Sensoren nur stehend auf der Leiterplatte angeordnet werden können. Es kommt nur ein relativ großvolumiger Bauteiltyp in Frage. Der Einsatz von miniaturisierten SMD-Hall-Sensoren ist schwer möglich. Die Messelektronik benötigt daher ein bestimmtes Bauvolumen.

In der DE 10 2005 029 862 A1 ist eine Leistungsregelung für ein Motorrad beschrieben, bei der die gewünschte Leistung am Gasgriff manuell vorgegeben und über Bowdenzug und unter Zwischenschaltung einer Drehfeder auf die Drosselklappenwelle übertragen wird. Die tatsächliche Stellung der Drosselklappe bestimmt aber ein Leistungsregelungs-Modul, das über einen elektromotorischen Stellantrieb in bestimmten Betriebsphasen die manuell vorgegebene Einstellung übersteuert. Das heißt, dass in diesen Phasen nicht der Fahrer die Leistungsabgabe des Motors bestimmt, sondern die Elektronik. Baulich ist die Elektronik und der Stellmotor örtlich getrennt vom Drosselklappenstutzen angeordnet. Dies erfordert jeweils ein separat abgedichtetes Elektronik- und Motorgehäuse und einen entsprechenden Bauraum. Die Elektronik erfasst nur die Drehlage der Drosselklappenwelle, nicht aber den manuell vorgegebenen Sollwert der Leistung. In Phasen der Übersteuerung kennt also das elektronische Leistungsregelungs-Modul den manuell vorgegebenen Leistungssollwert nicht.

### Darstellung der Erfindung

Der vorliegenden Erfindung liegt die Aufgabe zu Grunde, eine Vorrichtung zur Erfassung des Drehwinkels für eine elektromotorisch betriebene Drosselklappe so anzugeben, dass in jeder Betriebsphase, sowohl der seitens des Fahrers vorgegebenen Sollwert der Leistung, als auch der Istwert der Drosselklappenstellung messtechnisch erfasst werden kann, und dass die Messschaltung einen möglichst geringen Einbauraum einnimmt, so dass eine Integration mit einer Steuerelektronik, einem Getriebe und einem Stellmotor bei geringem Bauvolumen und mit geringem Aufwand möglich ist.

Der Erfindung liegt der Gedanke zu Grunde, den manuell vorgegebenen Sollwert und den Istwert einer Drosselklappenstellung zu gleicher Zeit und an einem Messort zu erfassen. Hierfür ist die Drosselklappenwelle als Hohlwelle ausgebildet. Im Hohlraum der Drosselklappenwelle ist eine Sollwert-Geberwelle drehbar gelagert. Diese Sollwert-Geberwelle ist mit einer manuell bedienbaren Einrichtung, zum Beispiel mit einem Gasgriff oder mit einem Fahrpedal eines Kraftfahrzeuges mechanisch so verbunden, dass der gewünschte Leistungssollwert in eine entsprechende Drehstellung der Sollwert-Geberwelle umgesetzt wird. Durch diese Konstruktion "Welle in Rohr" ist es möglich, an einem gemeinsamen Ende dieser beiden Wellen, d.h. an einem Messort, gleichzeitig sowohl den Sollwert der gewünschten Leistung als auch den Istwert der Drosselklappenstellung zu messen und diese drehwinkelabhängigen Leistungs-Soll- und Leistungs-Istwert-Signale für eine Steuerelektronik bereitzustellen. Die Messung kann beispielsweise auf einem magnetischen Messprinzip beruhen. Hierfür können an einem gemeinsamen Ende der beiden Wellen jeweils Dauermagnete angeordnet sein, deren Magnetfeld von benachbart angeordneten Magnetfeldsensoren, Z.B Hall-Sensoren erfasst wird. Im Ergebnis liegen beide Informationen gleichzeitig, an einem Messort als elektrisches Signal vor. Für eine Leistungsreglung ist dies von großem Vorteil, da die Leistungsregelung sehr differenziert vorgenommen werden kann.

In einer konstruktiv bevorzugten Ausführung sind die Permanentmagnete als Ringmagnete ausgebildet, die kostengünstig sind.

Hinsichtlich der Signalerfassung ist es vorteilhaft, wenn die Ringmagnete 2-polig und axial magnetisiert ausgeführt sind.

In einer bevorzugten Ausführungsform sind die Magnetfeldsensoren in SMD-Technik auf einer, der Stirnfläche der Ringmagnete zugewandten Hauptfläche einer Leiterplatte angeordnet. Bislang eingesetzte, großvolumige und schwer zu montierende Hall-Sensoren des Typs THT sind nicht mehr erforderlich. SMD-Hall-Sensoren benötigen ein vergleichsweise geringeres Bauvolumen. Eine automatische SMD-Bauteilmontage ist für eine Fertigung in großen Stückzahlen von großem Vorteil.

Wenn die SMD-Magnetfeldsensoren und die Bauelemente der Steuerelektronik auf einer gemeinsamen Leiterplatte angeordnet sind, ist aufgrund der vergleichsweise kurzen elektrischen Verbindungsleitungen die Störanfälligkeit gegenüber elektromagnetischen Störfeldern geringer. Aufgrund der kurzen Verbindungsleitungen zwischen Steuerelektronik und Magnetfeldsensoren, entfällt eine aufwendige Signalverstärkung. Die Sensorsignale können direkt von einem Mikroprozessor oder Mikrocontroller der Steuerelektronik verarbeitet werden.

Eine redundante Sensoranordnung ist hinsichtlich der Ausfallsicherheit von Vorteil. Bevorzugt wird eine Anordnung, bei der das Magnetfeld eines jeden Dauermagneten durch zwei Magnetfeldsensoren erfasst wird, die jeweils auf einer Kreislinie diametral gegenüber liegend angeordnet sind.

Unter fertigungstechnischen Gesichtpunkten ist es günstig, wenn der Dauermagnet der Messvorrichtung einstückig mit einem den Dauermagneten tragenden Antriebsglied ausgebildet ist. Durch eine solche Konstruktion kann beispielsweise ein Dauermagnet zusammen mit einem Zahnrad oder Zahnsegmentrad der Drosselklappenwelle in einem Arbeitsschritt hergestellt werden. Die Herstellung kann beispielsweise in Zweikomponenten-Spritzgusstechnik erfolgen. Besonders vorteilhaft ist es, wenn die Magnetisierung des an das Antriebsglied angespritzten Dauermagneten bereits in der Spritzgussform erfolgt.

Für die Verbindung zwischen der Sollwert-Geberwelle und einem Handdrehgriff oder einem Fahrpedal bietet sich ein Seilzug oder ein Bowdenzug an.

### Kurzbeschreibung der Zeichnungen

Zur weiteren Erläuterung der Erfindung wird im nachfolgenden Teil der Beschreibung auf die Zeichnungen Bezug genommen aus denen weitere vorteilhafte Ausgestaltungen, Einzelheiten und Weiterbildungen der Erfindung zu entnehmen sind.

Es zeigen:
- Figur 1: eine perspektivische Ansicht einer elektromotorisch betriebenen Drosselklappe, wie sie für ein Motorrad eingesetzt wird, wobei zwecks Erläuterung der erfindungsgemäßen Drehwinkelerfassung eine teilweise geschnittene Darstellung gezeichnet ist;
- Figur 2: die elektromotorisch betriebene Drosselklappe der Figur 1 mit abgehobenem Deckelteil, mit Blick auf die erfindungsgemäße Drehwinkelerfassung;
- Figur 3: einen Ausschnitt der elektromotorisch betriebenen Drosselklappe gemäß Figur 1 in einer Draufsicht auf die erfindungsgemäße Drehwinkelerfassung.

### Ausführung der Erfindung

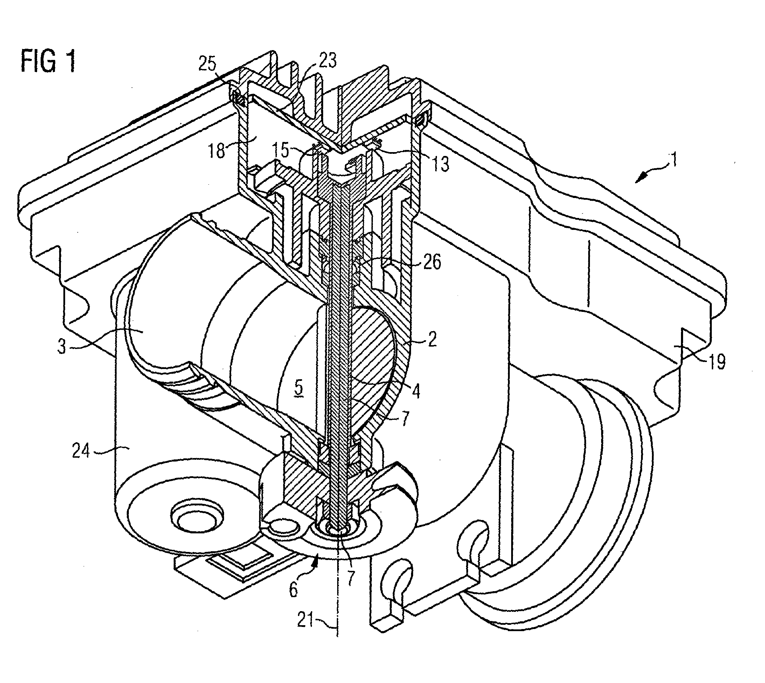

In der Figur 1 ist mit dem Bezugszeichen 1 im Gesamten eine elektromotorisch betriebene Drosselklappe gezeigt, wie sie beispielsweise für ein Motorrad verwendet wird.

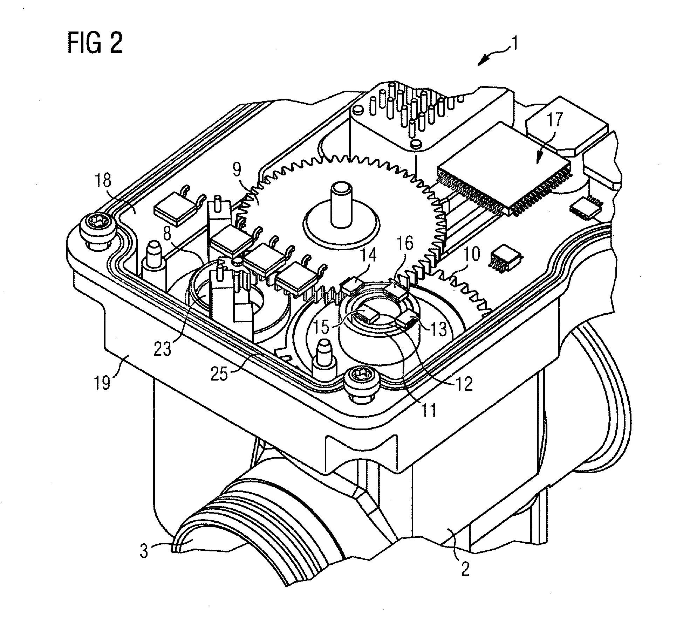

In einem rohrförmigen Ansaugtrakt 3 befindet sich eine Drosselklappe 5, die auf einer Drosselklappenwelle 4 befestigt und in einem Drosselklappengehäuse 2 um eine Achse 21 drehbar gelagert ist. Ein Elektromotor 24, von dem in Figur 1 nur die äußere Gehäusekontur erkennbar ist, treibt die Drosselklappenwelle 4 über Zahnräder, die später an Hand von Figur 2 näher erläutert werden, an.

Die teilweise geschnittene Darstellung in Figur 1 lässt erkennen, dass die Drosselklappenwelle 4 als dünnwandige Hohlwelle ausgebildet ist. Die Hohlwelle 4 ist im Drosselklappengehäuse um eine Achse 21 drehbar gelagert. Im Inneren der Hohlwelle ist eine Sollwert-Geberwelle 7 koaxial angeordnet und ebenfalls um die Achse 21 in der Hohlwelle drehbar gelagert. Die Sollwert-Geberwelle 7 ist mit einem Ende (in der Darstellung der Figur 1 ist es das untere Ende) aus dem Drosselklappengehäuse 2 herausgeführt. An diesem unteren Ende der Welle 7 ist ein Kabelrad 22 befestigt, welches über einen nicht näher dargestellten Bowdenzug mit einem Gasgriff eines Motorrades verbunden ist. Am Gasgriff wird manuell die gewünschte Leistung der Brennkraftmaschine des Zweirades vorgegeben und durch die, in Figur 1 im gesamten mit dem Bezugszeichen 6 gekennzeichnete Einrichtung in eine Drehstellung der Sollwert-Geberwelle 7 umgesetzt.

Das jeweils andere Ende der koaxialen Wellen 4 und 7 (in der Darstellung der Figur 1 das obere Ende der Hohlwelle 4 und das obere Ende der Welle 7) ist an einer Seite 26 ebenfalls aus dem Gehäuse 2 herausgeführt. Die Wellenstummel 4 und 7 ragen in den Innenraum eines angrenzenden Elektronikgehäuses 18. An der Stirnseite dieser Wellenenden 4, 7 ist jeweils ein Ringmagnet 11, 12 befestigt. Benachbart zur Stirnfläche dieser Ringmagnete 11, 12 befinden sich auf einer Leiterplatte 23 SMD-Magnetfeldsensoren. In Figur 1 sind nur die Sensoren 13 und 15 zu sehen. (Wie später an Hand von Figur 2 näher erläutert, wird das Magnetfeld der beiden Ringmagnete 11 und 12 zusätzlich durch zwei weitere, redundante SMD-Magnetfeldsensoren 14 und 16 erfasst.

Die gesamte Drehwinkelerfassung ist in dem Elektronikgehäuse 18 untergebracht, deren Gehäusewand 19 einstückig mit dem Drosselklappengehäuse 2 ausgebildet ist. Ein Deckel 20 schließt das Elektronikgehäuse 18 nach außen hin ab. Zur Abfuhr von Verlustwärme, die im Elektronikgehäuse 18 anfällt, weist der Deckel 20 Kühlrippen auf.

In der Figur 2 ist der Deckel 20 abgehoben und der Blick auf die erfindungsgemäße Drehwinkelerfassung freigegeben. Aus Gründen der besseren Übersichtlichkeit ist hier die Leiterplatte 23 nicht dargestellt, wohl aber beispielhaft die darauf befindlichen elektronischen Bauteile; Figur 2 zeigt beispielsweise einen Prozessor 17 auf der Oberseite und die SMD-Magnetfeldsensoren 13, 14, 15, 16 auf der Unterseite der (hier nicht gezeichneten) Leiterplatte 23.

Die SMD-Magnetfeldsensoren 15 und 16 erzeugen ein vom Drehwinkel der Sollwert-Geberwelle 7 abhängiges elektrisches Signal. Dieses Signal entspricht dem fahrerseitig manuell vorgegebener Sollwert der Leistung.

Die SMD-Magnetfeldsensoren 13 und 14 erfassen die Drehlage des Permanentmagneten 11, das heißt die Drehstellung der Drosselklappenwelle 4 und damit der Drosselklappe 5 im Ansaugrohr 3.

Beide Signale werden von redundant vorhandenen Hall-Sensoren 13, 14, 15, 16 erzeugt und auf nicht näher dargestellte Leiterbahnen direkt an den Prozessor 17 geführt. In Prozessor 17 werden diese Positionssignale neben einer Vielzahl weiterer Betriebsparameter ausgewertet. Der Prozessor 17 steuert den Elektromotor 24 an. An der Motorwelle des Elektromotors 24 ist ein Antriebszahnrad 8 befestigt, das sich in Eingriff mit einem Abtriebszahnrad 9 befindet, welches wiederum über ein (in Figur 2 nicht näher erkennbares) weiteres Zahnrad auf das Zahnsegmentrad 10 der Drosselklappenwelle 4 wirkt. Damit kann die Stellung der Drosselklappe 5 im Ansaugrohr 3 nach Maßgabe eines im Prozessor 17 ablaufenden Programm-Codes vorgegeben, d.h. geregelt werden. Eine Aufgabe dieser Reglung kann beispielsweise darin bestehen, Abgaswerte der Brennkraftmaschine innerhalb bestimmter Grenzen zu halten.

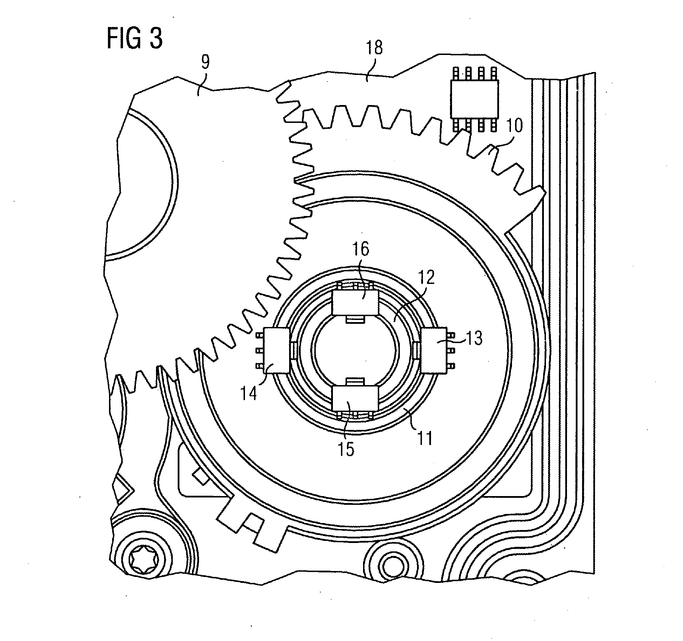

In der Figur 3 ist die erfindungsgemäße Drehwinkelerfassung nochmals in einer Draufsicht zu sehen. Die koaxiale Anordnung der beiden Ringmagnete um die Achse 21 ist sehr gut erkennbar. Eine unerwünschte gegenseitige Beeinflussung der Magnetfelder der Magnetringe 11 und 12, die das Messsignal verfälschen, kann rechentechnisch vom Mikroprozessor korrigiert werden. Die Permanentmagnete sind 2-polig ausgeführt und axial magnetisiert. Der Ringmagnet 11 bildet mit dem Zahnradsegment 10 ein Teil, das durch Zweikomponenten-Spritzgießen hergestellt ist. Die Axialfeld-Magnetisierung erfolgt bei der Herstellung in der Spritzgussform.

Durch die Erfindung ist es möglich, die elektronischen Baukomponenten der Stelleinrichtung in ein gemeinsames Gehäuse 18 zu integrieren. Dieses Elektronikgehäuse 18 ist durch eine einzige Dichtung 25 nach außen hin abgedichtet. Ein Radialwellendichtring 27 dichtet zwischen der Hohlwelle 4 und dem Gehäuse 2 ab. Die gesamte Abdichtung des Elektronikgehäuses 18 entspricht der IP68. Bislang erforderliche Kabeldurchführungen und Stecker entfallen durch dies integrierte Bauweise.

Das Drosselklappengehäuse 2 kann in Spritzgusstechnik aus einem metallischen Werkstoff oder aus Kunststoff kostengünstig hergestellt werden, wobei die Gehäusewand 19 des Elektronikgehäuses 18 mit dem Drosselklappengehäuse 2 mitgespritzt wird.

### Liste der verwendeten Bezugszeichen

1 elektromotorische Drosselklappe
2 Drosselklappengehäuses
3 Ansaugrohr
4 Drosselklappenwelle, Hohlwelle
5 Drosselklappe
6 Sollwert-Eingabevorrichtung
7 Sollwert-Geberwelle
8 Antriebszahnrad
9 Abtriebszahnrad
10 Zahnradsegment
11 Permanentmagnet auf 4
12 Permanentmagnet auf 7
13 Magnetfeldsensor
14 Magnetfeldsensor
15 Magnetfeldsensor
16 Magnetfeldsensor
17 Steuerelektronik
18 Elektronikgehäuse
19 Gehäusewand
20 Gehäusedeckel
21 Achse
22 Kabelrad
23 Leiterplatte
24 Elektromotor, Stellmotor
25 Dichtung
26 Seite
27 Radialwellendichtring

## Patentansprüche

1. Vorrichtung zur Drehwinkelerfassung einer elektromotorisch betriebenen Drosselklappe (5), welche auf einer Drosselklappenwelle (4) in einem Ansaugtrakt (3) eines Drosselklappengehäuses (2) drehbar gelagert ist, wobei ein mit der Drosselklappenwelle (4) gekoppelter Stellmotor (24) von einer Steuerelektronik (19) gesteuert die Drosselklappendrehstellung vorgibt, und wobei ein Sollwert der Drosselklappedrehstellung mittels einer manuell bedienbaren Sollwert-Eingabevorrichtung (6) vorgebbar ist und der Steuerelektronik zugeführt ist,
**dadurch gekennzeichnet,**
- **dass** die Drosselklappenwelle (4) als Hohlwelle ausgebildet ist,
- **dass** die Sollwert-Eingabevorrichtung (6) mit einer Sollwert-Geberwelle (7) gekoppelt ist, welche in der Hohlwelle koaxial und drehbeweglich angeordnet ist, so dass deren Drehstellung jeweils dem manuell vorgegebenen Sollwert der Drosselklappendrehstellung entspricht,
- **dass** an einer Seite (26) des Drosselklappengehäuses (2) ein Ende der Drosselklappenwelle (4) und ein Ende der Sollwert-Geberwelle (7) herausgeführt ist,
- **dass** an jedem dieser Enden jeweils ein Dauermagnet (11, 12) angeordnet ist,
- **dass** zur Erfassung des Magnetfeldes dieser Dauermagneten (11, 12) eine Magnetfeldsensor-Anordnung (13, 14, 15, 16) vorgesehen ist, welche aus der Drosselklappendrehstellung und aus der Drehstellung der Sollwert-Geberwelle jeweils ein winkelabhängiges elektrisches Signal erzeugt, und jedes dieser Signale der Steuerelektronik (17) zugeführt ist.

2. Vorrichtung nach Anspruch 1, **dadurch gekennzeichnet, dass** jeder Dauermagnet (11, 12) als Ringmagnet ausgebildet ist.

3. Vorrichtung nach Anspruch 2, **dadurch gekennzeichnet**, jeder Ringmagnet (11, 12) zwei axial magnetisierte Pole aufweist.

4. Vorrichtung nach einem der Ansprüche 2 oder 3, **dadurch gekennzeichnet, dass** die Magnetfeldsensor-Anordnung (13, 14, 15, 16) auf einer der Stirnflächen der Ringmagnete (11, 12) zugewandten Hauptfläche eines flächenförmigen Schaltungsträgers (23) angeordnet ist.

5. Vorrichtung nach Anspruch 4, **dadurch gekennzeichnet, dass** der flächenförmig Schaltungsträger eine Leiterplatte ist, auf welcher die Magnetfeldsensor-Anordnung (13, 14, 15, 16) und die Steuerelektronik (17) gemeinsam angeordnet sind.

6. Vorrichtung nach Anspruch 5, **dadurch gekennzeichnet, dass** Magnetfeld-Sensoranordnung (13, 14, 15, 16) durch jeweils zwei auf einem Kreis diametral gegenüberliegende SMD-Magnetfeldsensoren gebildet ist.

7. Vorrichtung nach Anspruch 5 oder 6, **dadurch gekennzeichnet, dass** das Ende der Hohlwelle (4) und das Ende der Sensor-Geberwelle (7) gemeinsam in ein Elektronikgehäuse (18) geführt sind und dass die Leiterplatte (23) in diesem Elektronikgehäuse (18) angeordnet ist.

8. Vorrichtung nach Anspruch 7, **dadurch gekennzeichnet, dass** das Elektronikgehäuse (18) eine Gehäusewand (19) aufweist, die einstückig mit dem Drosselklappengehäuse (2) hergestellt ist.

9. Vorrichtung nach Anspruch 7 oder 8, **dadurch gekennzeichnet, dass** das Elektronikgehäuse (18) einen Gehäusedeckel (20) aufweist, der als Kühlkörper fungiert.

10. Vorrichtung nach einem der Ansprüche 1 bis 9,
**dadurch gekennzeichnet, dass** die mechanische Kopplung zwischen Stellmotor (24) und Drosselklappenwelle (4) über Zahnräder hergestellt ist und dass ein Zahnrad oder Zahnradsegment (10) stirnseitig mit dem Dauermagnet (11) verbunden ist.

11. Vorrichtung nach Anspruch 10, **dadurch gekennzeichnet, dass** Zahnrad oder das Zahnsegmentrad (10) einstückig mit dem Dauermagnet (11) ausgebildet ist.

12. Vorrichtung nach Anspruch 11, **dadurch gekennzeichnet, dass** das Dauermagnet (11) und das Zahnrad oder das Zahnsegmentrad (10) in Zweikomponenten-Spritzgusstechnik hergestellt ist.

13. Vorrichtung nach einem der Ansprüche 1 bis 12,
**dadurch gekennzeichnet, dass** an dem, der Seite (26) gegenüberliegende, Ende der Sollwert-Geberwelle (7) ein Kabelrad (22) befestigt ist, welches über einen Bowdenzug mit einem Gasgriff am Lenker eines Motorrades verbunden ist.

14. Vorrichtung nach einem der Ansprüche 1 bis 12, **dadurch gekennzeichnet, dass** an dem, der Seite (26) gegenüberliegenden, Ende der Sollwert-Geberwelle (7) ein Kabelrad (22) befestigt ist, welche über einen Bowdenzug mit einem im Fahrgastraum eines Kraftfahrzeugs angeordneten Gaspedal verbunden ist.

## Claims

1. Apparatus for detecting the angle of rotation of a throttle valve (5) operated by means of an electric motor, which is supported in a rotatable manner on a throttle valve shaft (4) in an intake system (3) of a throttle valve housing (2), with a servomotor (24) coupled to the throttle valve shaft (4) predetermining the rotational position of the throttle valve subject to the control of an electronic control system (19) and with a setpoint value of the rotational position of the throttle valve being able to be predetermined by means of a manually operatable setpoint value input apparatus (6) and being supplied to the electronic control system,
**characterised in that**
- the throttle valve shaft (4) is configured as a hollow shaft,
- the setpoint value input apparatus (6) is coupled to a setpoint value sensor shaft (7), which is arranged coaxially and rotatably in the hollow shaft, so that its rotational position corresponds respectively to the manually predetermined setpoint value of the rotational position of the throttle valve,
- one end of the throttle valve shaft (4) and one end of the setpoint value sensor shaft (7) extend out of one side (26) of the throttle valve housing (2),
- a permanent magnet (11, 12) is arranged respectively at each of these ends,
- to detect the magnetic fields of these permanent magnets (11, 12) a magnetic field sensor arrangement (13, 14, 15, 16) is provided, which generates an angle-dependent electric signal respectively from the rotational position of the throttle valve and from the rotational position of the setpoint value sensor shaft and each of these signals is supplied to the electronic control system (17).

2. Apparatus according to claim 1, **characterised in that** each permanent magnet (11, 12) is configured as an annular magnet.

3. Apparatus according to claim 2, **characterised in that** each annular magnet (11, 12) has two axially magnetised poles.

4. Apparatus according to one of claims 2 or 3, **characterised in that** the magnetic field sensor arrangement (13, 14, 15, 16) is arranged on a main surface of a flat circuit support (23) facing towards the end faces of the annular magnets (11, 12).

5. Apparatus according to claim 4, **characterised in that** the flat circuit support is a printed circuit board, on which the magnetic field sensor arrangement (13, 14, 15, 16) and the electronic control system (17) are arranged in a common manner.

6. Apparatus according to claim 5, **characterised in that** the magnetic field sensor arrangement (13, 14, 15, 16) is formed by two SMD magnetic field sensors, each arranged diametrically opposite one another on a circle.

7. Apparatus according to claim 5 or 6, **characterised in that** the end of the hollow shaft (4) and the end of the sensor shaft (7) are inserted in a common manner into an electronic system housing (18) and the printed circuit board (23) is arranged in this electronic system housing (18).

8. Apparatus according to claim 7, **characterised in that** the electronic system housing (18) has a housing wall (19), which is produced as a single piece with the throttle valve housing (2).

9. Apparatus according to claim 7 or 8, **characterised in that** the electronic system housing (18) has a housing cover (20), which functions as a cooling system.

10. Apparatus according to one of claims 1 to 9, **characterised in that** the mechanical coupling between the servomotor (24) and throttle valve shaft (4) is produced by way of toothed wheels and a toothed wheel or toothed wheel segment (10) is connected to the end face of the permanent magnet (11).

11. Apparatus according to claim 10, **characterised in that** the toothed wheel or toothed segment wheel (10) is configured as a single piece with the permanent magnet (11).

12. Apparatus according to claim 11, **characterised in that** the permanent magnet (11) and the toothed wheel or toothed segment wheel (10) are produced using twin-component injection moulding technology.

13. Apparatus according to one of claims 1 to 12, **characterised in that** a cable wheel (22) is fixed to the end of the setpoint value sensor shaft (7) opposite the side (26), being connected to a throttle lever on the steering system of a motorcycle by way of a Bowden cable.

14. Apparatus according to one of claims 1 to 12, **characterised in that** a cable wheel (22) is fixed to the end of the setpoint value sensor shaft (7) opposite the side (26), being connected to an accelerator pedal arranged in the passenger compartment of a motor vehicle by way of a Bowden cable.

## Revendications

1. Dispositif pour l'acquisition de l'angle de rotation d'un papillon (5) entraîné par moteur électrique, qui est monté de façon rotative sur un arbre de papillon (4) dans une branche d'aspiration (3) d'un boîtier de papillon (2), un moteur de positionnement (24) couplé avec l'arbre de papillon (4), commandé par une électronique de commande (19), prédéfinissant la position de rotation du papillon, et une valeur de consigne de la position de rotation du papillon pouvant être prédéfinie au moyen d'un dispositif d'entrée de valeur de consigne (6) contrôlable manuellement et étant amenée à l'électronique de commande,
**caractérisé**
- **en ce que** l'arbre de papillon (4) est conçu sous forme d'arbre creux,
- **en ce que** le dispositif d'entrée de valeur de consigne (6) est couplé avec un arbre générateur de valeur de consigne (7), qui est disposé dans l'arbre creux de façon coaxiale et mobile en rotation, de sorte que sa position de rotation correspond à chaque fois à la valeur de consigne prédéterminée manuellement de la position de rotation du papillon,
- **en ce qu'**une extrémité de l'arbre de papillon (4) et une extrémité de l'arbre générateur de valeur de consigne (7) sont guidées à la sortie sur un côté (26) du boîtier de papillon (2),
- **en ce qu'**à chaque fois un aimant permanent (11, 12) est disposé sur chacune de ces extrémités,
- **en ce que**, pour la détection du champ magnétique de ces aimants permanents (11, 12), il est prévu un agencement de capteur de champ magnétique (13, 14, 15, 16), qui génère à chaque fois un signal électrique dépendant de l'angle à partir de la position de rotation de papillon et à partir de la position de rotation de l'arbre générateur de valeur de consigne, et chacun de ces signaux est amené à l'électronique de commande (17).

2. Dispositif selon la revendication 1, **caractérisé en ce que** chaque aimant permanent (11, 12) est conçu comme aimant annulaire.

3. Dispositif selon la revendication 2, **caractérisé en ce que** chaque aimant annulaire (11, 12) présente deux pôles magnétisés axialement.

4. Dispositif selon l'une quelconque des revendications 2 ou 3, **caractérisé en ce que** l'agencement du capteur de champ magnétique (13, 14, 15, 16) est disposé sur une surface principale, associée aux surfaces avant des aimants annulaires (11, 12), d'un support de circuit (23) en forme de surface.

5. Dispositif selon la revendication 4, **caractérisé en ce que** le support de circuit en forme de surface est une plaque de circuits imprimés, sur laquelle l'agencement de capteur de champ magnétique (13, 14, 15, 16) et l'électronique de commande (17) sont disposés en commun.

6. Dispositif selon la revendication 5, **caractérisé en ce que** l'agencement de capteur de champ magnétique (13, 14, 15, 16) est formé par respectivement deux capteurs de champ magnétique SMD (composants montés en surface) diamétralement opposés sur un cercle.

7. Dispositif selon la revendication 5 ou 6, **caractérisé en ce que** l'extrémité de l'arbre creux (4) et l'extrémité de l'arbre générateur de capteur (7) sont guidées conjointement dans un boîtier d'électronique (18) et **en ce que** la plaque de circuits imprimés (23) est disposée dans ce boîtier d'électronique (18).

8. Dispositif selon la revendication 7, **caractérisé en ce que** le boîtier d'électronique (18) présente une paroi de boîtier (19), qui est fabriquée d'une seule pièce avec le boîtier de papillon (2).

9. Dispositif selon la revendication 7 ou 8, **caractérisé en ce que** le boîtier d'électronique (18) présente un couvercle de boîtier (20), qui fait office de corps de refroidissement.

10. Dispositif selon l'une quelconque des revendications 1 à 9, **caractérisé en ce que** l'accouplement mécanique entre le moteur de positionnement (24) et l'arbre de papillon (4) est établi au moyen de roues crantées et **en ce qu'**une roue crantée ou un segment de roue crantée (10) est relié côté avant à l'aimant permanent (11).

11. Dispositif selon la revendication 10, **caractérisé en ce que** la roue crantée ou le segment de roue crantée (10) est conçu d'une seule pièce avec l'aimant permanent (11).

12. Dispositif selon la revendication 11, **caractérisé en ce que** l'aimant permanent (11) et la roue crantée ou le segment de roue crantée (10) est fabriqué dans une technique de moulage par injection à deux composants.

13. Dispositif selon l'une quelconque des revendications 1 à 12, **caractérisé en ce que** sur l'extrémité, opposée au côté (26), de l'arbre générateur de valeur de consigne (7) est fixée une roue à câble (22), qui est reliée par un câble Bowden à une poignée de gaz sur le bras oscillant d'une roue de moteur.

14. Dispositif selon l'une quelconque des revendications 1 à 12, **caractérisé en ce que** sur l'extrémité, opposée au côté (26), de l'arbre générateur de valeur de consigne (7) est fixée une roue à câble (22), qui est reliée par un câble Bowden à une pédale d'accélérateur disposée dans l'habitacle d'un véhicule automobile.
